# EUROPEAN PATENT SPECIFICATION

(11) **EP 2 820 331 B1**
(45) Date of publication and mention of the grant of the patent: **10.08.2016**
(21) Application number: 13713999.4
(22) Date of filing: 26.02.2013
(51) Int. Cl.: F16H 25/22

(54) **SCREW-NUT ASSEMBLY WITH ROLLING ELEMENTS**
SCHRAUBEN-MUTTERN-ANORDNUNG MIT WÄLZKÖRPERN
ENSEMBLE VIS-ÉCROU POURVU D'ÉLÉMENTS ROULANTS

(30) Priority: 28.02.2012 IT VR20120033
(43) Date of publication of application: 07.01.2015
(73) Proprietor: Horvath, Ildiko, 37016 Garda (VR) (IT)
(72) Inventor: BERTI, Roberto, I-37016 Garda (VR) (IT)
(74) Representative: Fisauli, Beatrice A. M.
(86) International application number: PCT/IB2013/051533
(87) International publication number: WO 2013/128372

(56) References cited:
- EP-A1- 2 075 488
- EP-A2- 0 366 594
- DE-A1-102008 039 390
- US-A- 4 541 297
- US-B2- 6 598 708

## Description

The present invention refers in general to a screw - nut screw coupling. More particularly, it refers to a screw - nut screw coupling that improves the performance through its particular configuration.

The screw - nut screw couplings of the prior art, commonly referred to as re-circulating ball screws, consist of a threaded shaft surrounded by a nut with integrated balls and a re-circulating ball mechanism.

The re-circulating ball screws are the most commonly used types of control for industrial machines and precision instruments.

In fact, a re-circulating ball screw allows to transform a rotary motion into a linear motion and vice versa, in applications requiring high precision levels, motion reversibility and efficiency.

Unlike the trapezoidal screws operating with sliding friction, the re-circulating ball screws operate with rolling friction as a result of the presence of balls, each ball being free to rotate about an axis parallel to the screw and each ball being interposed between screw and nut screw.

To prevent said balls from escaping out of the coupling, re-circulating ball systems are carried out to obtain a rolling path that deviates, at least for a portion, from the grooves formed on the screw and nut screw.

Several typologies of re-circulating ball screws are known. Said screws are obtained with particular constructions of the nut surrounding the screw. For instance, the recirculation may be obtained through one or more circuits with an external recirculation tube or one or more circuits with internal deflector.

The typology adopted to obtain the recirculation of the balls affects the maximum speed of rotation of the screw or nut screw, the load capacity of the system and the rigidity of the nut screw.

The re-circulating ball screws are not adapted to support an axial load, for instance in case of a screw which rotates about an axis of rotation which is not perfectly horizontal to the ground.

Besides, the presence of the recirculation complicates the construction and the realization of the coupling. In addition, the assembly is laborious and requires skilled labor.

Another known typology of screw - nut screw coupling is commonly referred to as planetary roller screw in which the coupling elements between screw and nut screw are threaded rollers interposed between screw and nut screw. The features of the coupling depend on the typology of thread formed on the rollers and consequently on the screw.

It is possible to use threads with thinner pitch than the threads formed on the re-circulating ball screws so that a greater number of contact points is obtained and heavier loads and higher speeds are possible.

The planetary rollers rotate about an axis of rotation parallel to the axis of rotation of the screw and their construction is complex.

The construction of the planetary roller screws is complex and the manufacturing costs are high. Besides, their working must take place with an axis of rotation parallel to the ground otherwise the performance gets worse.

An aim of the invention is to obviate the above mentioned drawbacks and further ones through a screw - nut screw coupling whose use is more flexible as this coupling may support also axial loads.

Another aim of the invention is to carry out a screw - nut screw coupling offering a good performance on avoiding the presence of a recirculation of balls or planetary rollers.

The document EP2075488 A is considered to be the closest prior art showing all features of the preambule of claim 1.

All the above aims and further ones are achieved according to the invention through a screw - nut screw coupling adapted to couple a screw with a nut screw, said screw being adapted to be rotated about a first axis of rotation oriented in a first direction, and said nut screw being arranged to surround, at least partially, the screw. The screw - nut screw coupling comprises one or more coupling elements and which, couple the screw to the nut screw and the one or more coupling elements rotate about a second axis of rotation, oriented in a second direction which is different from the first direction.

The screw - nut screw coupling is characterized by comprising a first helix and a second helix, of which the first helix has the same pitch as the second helix and a shorter radius than the second helix, and the one or more coupling elements may be pivoted at a first end to the first helix and at a second end to the second helix. The presence of the first helix and second helix allows to pivot the coupling elements to elements that may be carried out regardless of the screw or nut screw and in some cases, it is possible to obtain a more solid and stable connection for the coupling elements.

Since the coupling element rotates about an axis of rotation oriented in a direction different from that of the axis of rotation of the screw, the coupling element may rest and/or roll on surfaces different from those on which a ball in a re-circulating ball coupling or in a planetary roller coupling rests and/or rolls so that it is possible to obtain coupling elements which may support loads oriented in directions different from the radial directions to the screw, for instance loads oriented in axial directions to the screw.

Advantageously, said second axis of rotation is substantially perpendicular to the first axis of rotation about which the screw rotates. The axis of rotation, substantially perpendicular to the axis of rotation about which the screw rotates, allows to obtain coupling elements which are able to best support loads oriented in directions substantially axial to the screw.

In addition, said second axis of rotation may be integral with the screw or alternatively, said second axis of rotation may be integral with the nut screw. The so-described construction allows to make the axis of rotation of the coupling element integral with the screw or with the nut screw, which allows to select the most comfortable construction or the construction that meets certain criteria for the planning of the screw - nut screw coupling.

Advantageously, the one or more coupling elements may be pivoted to the nut screw and the screw may comprise guiding means on which the one or more coupling elements roll or alternatively in which the one or more coupling elements may be pivoted to the screw and the nut screw may comprise guiding means on which the one or more coupling elements roll. In this way, the one or more coupling elements are pivoted to the screw or nut screw and are not free to move in respect to the screw or nut screw so as to avoid the presence of a recirculation or planetary rollers. Besides, it is possible to choose once again to pivot the one or more coupling elements to the screw or nut screw by selecting the more comfortable construction or the construction meeting certain planning criteria of the screw - nut screw coupling.

Advantageously, the first helix may be bound to the screw or alternatively, the second helix may be bound to the nut screw. In binding the first helix to the screw, a substantially cylindrical shaft is usable and the first helix may be bound to the outer surface of said shaft on simplifying the construction of the screw. Alternatively, in binding the second helix to the nut screw, it is possible to use a nut screw without internal thread, the second helix being bound to the internal walls.

Advantageously, a first coupling element is pivoted by means of a first pin and a second coupling element is pivoted by means of a second pin. In case a thread having a rectangular profile is obtained on the nut screw, into which thread the screw can be screwed, a first groove is obtained on a first side of the thread of the nut screw and the first coupling element rolls on said first groove, and a second groove is obtained on a second side of the thread of the nut screw and the second coupling element rolls on said second groove, respectively while in case a thread having a rectangular profile is obtained on the screw, a first groove is obtained on a first side of the thread of the screw and the first coupling element rolls on said first groove, and a second groove is obtained on a second side of the thread of the screw and the second coupling element rolls on said second groove, respectively.

Advantageously, said coupling element has an oblong shape in the direction of its axis of rotation. In addition, said coupling element may be shaped like an ellipsoid.

Further features and details of the invention will be better understood from the following specification which is provided as a non-limiting example as well as from the accompanying drawing, wherein:
Figure 1 is a schematic view, in section, of a screw - nut screw coupling according to a first embodiment of the invention;
Figure 2 is a schematic view, in section, of a screw - nut screw coupling according to a second embodiment of the invention.

With reference to the accompanying figures, number 10 denotes a screw - nut screw coupling on the whole.

The screw - nut screw coupling 10 comprises a first nut screw 12 which surrounds a first screw 14 partially. The first screw 14 comprises a shaft 16 to which a first narrow helix 18 is constrained by means of a key. Obviously, different fixing methods equivalent to the key 22 may be utilized.

A first coupling element 24 showing an ellipsoidal shape is pivoted to the first narrow helix 18 by means of a first pin 26. The first pin 26 passes through the first coupling element 24 and is pivoted on a first large helix 20.

The first narrow helix 18 surrounds the shaft 16 and forms a spiral having a certain pitch and is at a constant distance from the axis of rotation 15 of the shaft 16. Likewise, the first large helix 20 forms a spiral having the same pitch as the first narrow helix 18 but it is at a greater distance from the axis of rotation 15 than the first narrow helix 18.

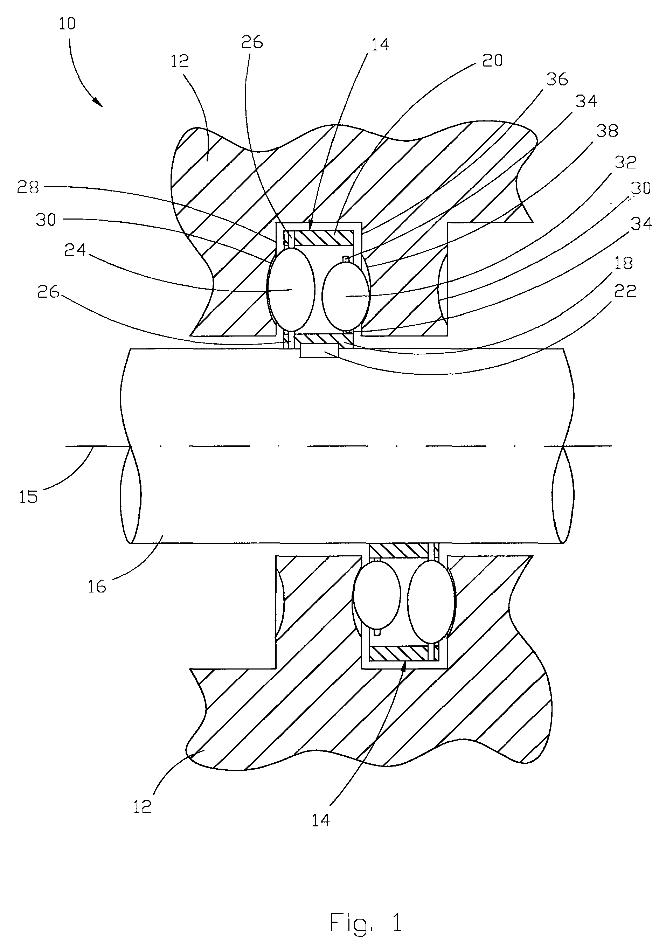

Figure 1 shows only a portion of the first narrow helix 18 and a portion of the second large helix 20 which portions correspond to a winding but it is to be intended that on applying a screw - nut screw coupling according to the invention, the shaft 16 may be wrapped by a high number of windings.

A thread with a rectangular cross-section is obtained on the first nut screw 12. The first screw 14 may be screwed into said thread.

A first groove 30 is obtained on a first side 28 of the thread of the first nut screw 12 and is shaped like an arc of a circle. The first coupling element 24 is in contact in at least one point of the first groove 30 so as to rotate about the first pin 26 on maintaining the first narrow helix 18 and the first large helix 20 spaced from the first side 28.

A second coupling element 32 is hinged to the first narrow helix 18 and to the first large helix 20 by means of a second pin 34. The second coupling element 32 rolls on a second groove 38 obtained on a second side 36 of the thread of the nut screw 12.

Besides, the second coupling element 32 keeps the first narrow helix 18 and the first large helix 20 spaced from the second side 36.

The first coupling element 24 and the second coupling element 32 are spaced from each other so that it is not possible for them to come into contact with each other. In fact, the first pin 26 and second pin 34 are pivoted at a predetermined distance along the main direction of the axis of rotation 15 of the shaft 16. Each respective axis of rotation of the first coupling element 24 and second coupling element 32 intersects the axis of rotation 15 and has a radial development from said axis of rotation.

A series of coupling elements corresponding to the first and second coupling element 24 and 32 are pivoted to the first narrow helix 18 and first large helix 20 so as to rotate on the first groove 30 and second groove 38 alternately.

The first nut screw 12 may be obtained, for instance, on a flange nut adapted to be bound to a carriage of a machine tool, and the first screw 14 may be coupled, for instance, to a motor which rotates said screw so that a rotation of the screw 14 involves a translation of the nut and a consequent displacement of the carriage.

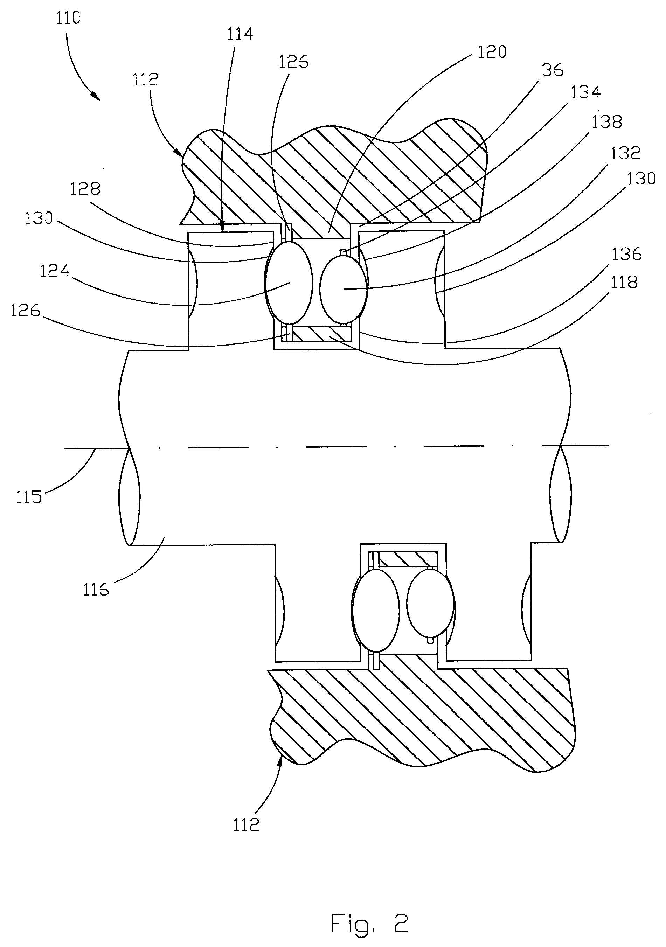

According to a variant of the invention as it appears from Figure 2, a screw - nut screw coupling 110 comprises a nut screw 112 surrounding a screw 114 partially. The screw 114 comprises a shaft 116 on which a thread showing a rectangular profile is obtained.

A large helix 120 is bound to the nut screw 112 so as to form a single body. Obviously, different fixing methods may be utilized, which are to be considered as equivalent to the one-body binding.

A first ellipsoid-shaped coupling element 124 is pivoted to the large helix 120 by means of a third pin 126. The first pin 126 passes through the first coupling element 124 on pivoting thus on a narrow helix 118.

The narrow helix 118 surrounds the shaft 116 at a distance without contact on forming a helix having a predetermined pitch and is at a constant distance from the axis of rotation 115 of the shaft 116. Likewise, the large helix 120 forms a helix having the same pitch as the second narrow helix 18 but at a greater distance from the axis of rotation 15 than the second narrow helix.

Figure 2 shows only a portion of the narrow helix 118 and a portion of the large helix 120 which portions correspond to a winding but it is to be intended that in the application of a screw - nut screw coupling according to the invention, the shaft 116 may be wrapped by a greater number of windings.

A first groove 130 shaped like an arc of a circle is obtained on a first side 128 of the thread of the screw 114. The first coupling element 124 is in contact in at least one point of the third groove 130 so as to rotate about the first pin 126 on keeping the narrow helix 118 and the large helix 120 spaced from the first side.

A second coupling element 132 is pivoted to the narrow helix 118 and large helix 120 by means of a second pin 34. The second coupling element 132 rolls on a second groove 138 obtained on a second side 136 of the thread of the screw 114.

Besides, the second coupling element 132 keeps the narrow helix 118 and the large helix 120 spaced from the second side 136.

The first coupling element 124 and the second coupling element 132 are spaced from each other so that they do not come into contact with each other. In fact, the first pin 126 and the second pin 134 are pivoted at a predetermined distance along the main direction of the axis of rotation 115 of the shaft 116. Each respective axis of rotation of the first coupling element 124 and second coupling element 132 intersects the axis of rotation 115 and has a radial development from said axis of rotation.

As is described in relation to the coupling 10, the nut screw 112 may be obtained, for instance, also on a flange nut adapted to be constrained to a carriage of a machine tool, and the screw 114 may be coupled, for instance, to a motor which rotates said screw.

According to another variant of the invention, a screw - nut screw coupling may be provided with a removable narrow or large helix so that said helix may be removed and it is possible to have access to the coupling elements to replace them or to attend to a general maintenance.

The particular configuration of the coupling elements and grooves obtained on a side of the threads in the nut screw and/or screw according to the invention allows to obtain a screw - nut screw coupling which works without utilizing a complex recirculation of balls or planetary rollers as in the couplings of the prior art.

In addition, the screw - nut screw coupling according to the invention may be used also in case of axial load or mixed load so that a higher flexibility of utilization is obtained.

The particular conformation of the rolling surfaces of the screw - nut screw coupling according to the invention allows to operate also with axes of rotation of the screw which are not parallel to the ground, for instance axes of rotation of the screw which are perpendicular to the ground, contrary to the couplings of the prior art.

A technician of the sector can make further changes or variants which are to be considered as included in the scope of protection of the present invention. For instance, grooves and profiles showing shapes different from a thread with a rectangular profile may be obtained on the screw and/or nut screw, or the coupling elements may have shapes different from the ellipsoid shape such as a spherical shape or a cylindrical shape. In addition, one or more coupling elements may be pivoted to the screw and/or the nut screw directly so that it is possible to avoid a use of a large helix and/or a narrow helix.

## Claims

1. Screw-nut screw coupling (10; 110) adapted to couple a screw (14; 114) with a nut screw (12; 112), said screw (14; 114) is adapted to be rotated about a first axis of rotation (15; 115) oriented in a first direction, and said nut screw (12; 112) is arranged to surround, at least partially, the screw (14; 114), and said screw-nut screw coupling (10; 110) comprises at least a coupling element (24, 32; 124, 132) which couples the screw (14; 114) with the nut screw (12; 112);
the at least a coupling element (24, 32; 124, 132) rotates about a second axis of rotation (26, 34; 126, 134), oriented in a second direction which is different from the first direction; **characterized by** the fact that the screw-nut screw coupling (10; 110) comprises a first helix (18; 118) and a second helix (20; 120), of which the first helix (18, 118) has the same pitch as the second helix (20; 120) and a shorter radius than the second helix (20; 120), and wherein the at least a coupling element (24, 32; 124, 132) is pivoted at a first end on the first helix (18; 118) and at a second end on the second helix (20; 120).

2. Screw-nut screw coupling (10; 110) according to claim 1, wherein said second axis of rotation (26, 34; 126, 134) is substantially perpendicular to the first axis of rotation about which the screw rotates.

3. Screw-nut screw coupling (10; 110) according to any of the preceding claims, wherein said second axis of rotation (26, 34; 126, 134) is integral with the screw (14; 114) or alternatively, wherein the second axis of rotation (26, 34; 126, 134) is integral with the nut screw (12; 112).

4. Screw-nut screw coupling (10; 110) according to any of the preceding claims, wherein the at least a coupling element (124, 132) is pivoted on the nut screw (112) and the screw (114) comprises guiding means (130, 138) on which the at least a coupling element (124, 132) rolls or alternately wherein the at least a coupling element (24, 32) is pivoted on the screw (14) and the nut screw (12) comprises guiding means (30, 38) on which the at least a coupling element (24, 32) rolls.

5. Screw-nut screw coupling (10) according to any of the preceding claims, wherein the first helix (18) is bound to the screw (14).

6. Screw-nut screw coupling (10; 110) according to claim 5, wherein a first coupling element (24; 124) is pivoted by means of a first pin (26; 126) and a second coupling element (32; 132) is pivoted by means of a second pin (34; 134), and a thread having a rectangular profile is obtained on the nut screw (12), into which thread the screw (14) can be screwed, and wherein a first groove (30) is obtained on a first side (28) of the thread of the nut screw (12) and the first coupling element (24) rolls on said first groove (30), and a second groove (38) is obtained on a second side (36) of the thread of the nut screw (12) and the second coupling element (32) rolls on said second groove (38), respectively.

7. Screw-nut screw coupling (110) according to any of the preceding claims, wherein the second helix (118) is bound to the nut screw (114).

8. Screw-nut screw coupling (10; 110) according to claim 7, wherein a first coupling element (24; 124) is pivoted by means of a first pin (26; 126) and a second coupling element (32; 132) is pivoted by means of a second pin (34; 134), and a thread having a rectangular profile is obtained on the nut screw (12), and wherein a first groove (130) is obtained on a first side (128) of the thread of the screw (114) on which first groove (130) the first coupling element (124) rolls, and a second groove (138) is obtained on a second side (136) of the thread of the screw (114) on which second groove (138) the second coupling element (132) rolls, respectively.

9. Screw-nut screw coupling (10; 110) according to any of the preceding claims, wherein said coupling element (24, 32; 124, 132) has an oblong shape in the direction of its axis of rotation (26, 34; 126, 134).

## Patentansprüche

1. Schraube-Mutter-Verbindung (10; 110), geeignet, eine Schraube (14; 114) mit einer Mutter (12; 112) zu verbinden, besagte Schraube (14; 114) ist geeignet, um eine erste Drehachse (15; 115) gedreht zu werden, die in eine erste Richtung orientiert ist, und besagte Mutter (12; 112) ist derart angeordnet, dass sie, zumindest teilweise, die Schraube (14; 114) umringt, und besagte Schraube-Mutter-Verbindung (10; 110) enthält mindestens ein Kupplungselement (24, 32; 124, 132), das die Schraube (14; 114) mit der Mutter (12; 112) verbindet;
das mindestens eine Kupplungselement (24, 32; 124, 132) dreht sich um eine zweite Drehachse (26, 34; 126, 134), die in einer zweiten Richtung orientiert ist, die anders als die der ersten Richtung ist;
**dadurch gekennzeichnet, dass** die Schraube-Mutter-Verbindung (10; 110) eine erste Schraublinie (18; 118) und eine zweite Schraublinie (20; 120) enthält, von denen die erste Schraublinie (18, 118) dieselbe Gewindesteigung wie die zweite Schraublinie (20; 120) besitzt und einen kürzeren Radius als die zweite Schraublinie (20; 120) besitzt, und wobei das mindestens eine Kupplungselement (24, 32; 124, 132) an einem ersten Ende auf der ersten Schraublinie (18; 118) und an einem zweiten Ende auf der zweiten Schraublinie (20; 120) drehbar gelagert ist.

2. Schraube-Mutter-Verbindung (10; 110) nach Anspruch 1, wobei besagte zweite Drehachse (26, 34; 126, 134) im Wesentlichen senkrecht zur ersten Drehachse steht, um die sich die Schraube dreht.

3. Schraube-Mutter-Verbindung (10; 110) nach jedem der vorhergehenden Ansprüche, wobei die zweite Drehachse (26, 34; 126, 134) Bestandteil der Schraube (14; 114) ist oder alternativ dazu, wobei die zweite Drehachse (26, 34; 126, 134) Bestandteil der Mutter (12; 112) ist.

4. Schraube-Mutter-Verbindung (10; 110) nach jedem der vorhergehenden Ansprüche, wobei das mindestens eine Kupplungselement (124, 132) auf der Mutter (112) drehbar gelagert ist und die Schraube (114) Führungsmittel (130, 138) enthält, auf denen das mindestens eine Kupplungselement (124, 132) rollt oder alternativ dazu, wobei das mindestens eine Kupplungselement (24, 32) auf der Schraube (14) drehbar gelagert ist und die Mutter (12) Führungsmittel (30, 38) enthält, auf denen das mindestens eine Kupplungselement (24, 32) rollt.

5. Schraube-Mutter-Verbindung (10) nach jedem der vorhergehenden Ansprüche, wobei die erste Schraublinie (18) mit der Schraube (14) verbunden ist.

6. Schraube-Mutter-Verbindung (10; 110) nach Anspruch 5, wobei ein erstes Kupplungselement (24; 124) mithilfe eines ersten Zapfens (26; 126) drehbar gelagert und ein zweites Kupplungselement (32; 132) mithilfe eines zweiten Zapfens (34; 134) gelagert ist und ein Gewinde mit rechteckigem Profil auf der Mutter (12) gewonnen wird, in welches Gewinde die Schraube (14) geschraubt werden kann, und wobei eine erste Nut (30) auf einer ersten Seite (28) des Gewindes der Mutter (12) gewonnen wird und das erste Kupplungselement (24) in besagter erster Nut (30) rollt, und eine zweite Nut (38) auf einer zweiten Seite (36) des Gewindes der Mutter (12) gewonnen wird und das zweite Kupplungselement (32) auf besagter zweiter Nut (38) rollt.

7. Schraube-Mutter-Verbindung (110) nach jedem der vorhgehenden Ansprüche, in der die zweite Schraublinie (118) mit der Mutter (114) verbunden ist.

8. Schraube-Mutter-Verbindung (10; 110) nach Anspruch 7, wobei ein erstes Kupplungselement (24; 124) mittels eines ersten Zapfens (26; 126) drehbar gelagert ist und ein zweites Kupplungselement (32; 132) mithilfe eines zweiten Zapfens (34; 134) drehbar gelagert ist, und ein Gewinde mit rechteckigem Profil auf der Mutter erhalten wird (12), und wobei eine erste Nut (130) auf einer ersten Seite (128) des Gewindes der Schraube (114) gewonnen wird, auf dieser ersten Nut (130) sich das erste Kupplungselement (124) dreht, und eine zweite Nut (138) auf einer zweiten Seite (136) des Gewindes der Schraube (114) gewonnen wird, auf welcher zweiten Nut (138) das zweite Kupplungselement (132) rollt.

9. Schraube-Mutter-Verbindung (10; 110) nach jedem der vorhergehenden Ansprüche, wobei besagtes Kupplungselement (24, 32; 124, 132) eine in Richtung seiner Drehachse (26, 34; 126, 134) längliche Form aufweist.

## Revendications

1. Couplage de vis-vis à écrou (10; 110) adapté pour coupler une vis (14; 114) avec un écrou (12; 112), ladite vis (14; 114) est adaptée pour être mise en rotation autour d'un premier axe de rotation (15; 115) orienté dans une première direction, et ladite vis à écrou (12; 112) est agencée pour entourer, au moins partiellement, la vis (14; 114), et ledit accouplement vis-vis à écrou (10; 110) comprend au moins un élément de couplage (24, 32; 124, 132) qui couple la vis (14; 114) avec la vis à écrou (12; 112) ;
au moins l'élément de couplage (24, 32; 124, 132) tourne autour d'un deuxième axe de rotation (26, 34; 126, 134), orienté dans une seconde direction qui est différente de la première direction ;
**caractérisé par le fait que** le couplage vis-vis à écrou (10; 110) comprend une première hélice (18; 118) et une seconde hélice (20; 120), dont la première hélice (18, 118) a la même hauteur que la seconde hélice (20; 120) et un rayon plus court que la seconde hélice (20; 120), et dans lequel au moins l'élément de couplage (24, 32; 124, 132) pivote à une première extrémité de la première hélice (18; 118) et à une deuxième extrémité sur la seconde hélice (20; 120).

2. Couplage vis-vis à écrou (10; 110) selon la revendication 1, dans lequel ledit deuxième axe de rotation (26, 34; 126, 134) est sensiblement perpendiculaire au premier axe de rotation autour duquel la vis tourne.

3. Couplage vis-vis à écrou (10; 110) selon l'une des revendications précédentes, dans lequel ledit deuxième axe de rotation (26, 34; 126, 134) est solidaire de la vis (14; 114) ou, en variante, dans lequel le deuxième axe de rotation (26, 34; 126, 134) est solidaire de la vis à écrou (12; 112).

4. Couplage vis-vis à écrou (10; 110) selon l'une des revendications précédentes, dans lequel au moins un élément de couplage (124, 132) est articulé sur la vis à écrou (112) et la vis (114) comprend un moyen de guidage (130 , 138) sur lequel l'élément de couplage (124, 132) roule ou alternativement, dans lequel l'élément de couplage (24, 32) est articulée sur la vis (14) et la vis à écrou (12) comporte des moyens de guidage (30, 38) sur lequel au moins un des éléments de couplage (24, 32) roule.

5. Couplage vis-vis à écrou (10) selon l'une des revendications précédentes, dans lequel la première hélice (18) est liée à la vis (14).

6. Couplage vis-vis à écrou (10; 110) selon la revendication 5, dans lequel un premier élément de couplage (24; 124) est articulé au moyen d'une première broche (26; 126) et un second élément de couplage (32; 132) est pivotée au moyen d'une seconde broche (34; 134), et un filetage ayant un profil rectangulaire est obtenu sur la vis à écrou (12), dans lequel le filet de la vis (14) peut être vissé et dans lequel une première rainure (30) est obtenue sur un premier côté (28) du filetage de la vis à écrou (12) et le premier élément de couplage (24) roule sur ladite première gorge (30), et une deuxième rainure (38) est obtenue sur un deuxième côté (36) du filetage de la vis à écrou (12) et le second élément de couplage (32) roule sur ladite deuxième rainure (38), respectivement.

7. Couplage vis-vis à écrou (110) selon l'une des revendications précédentes, dans lequel la seconde hélice (118) est liée à la vis à écrou (114).

8. Couplage vis-vis à écrou (10; 110) selon la revendication 7, dans lequel un premier élément de couplage (24; 124) est articulé au moyen d'une première broche (26; 126) et un second élément de couplage (32; 132) est pivotée au moyen d'une seconde broche (34; 134), et un filetage ayant un profil rectangulaire est obtenu sur la vis à écrou (12) dans lequel une première rainure (130) obtenue sur un premier côté (128) du filetage de la vis (114) sur laquelle la première rainure (130) le premier élément de couplage (124) roule, et une deuxième rainure (138) est obtenue sur un deuxième côté (136) du filetage de la vis à écrou (114) sur laquelle la deuxième rainure (138) le deuxième élément de couplage (132) roule, respectivement.

9. Couplage vis-vis à écrou (10; 110) selon l'une des revendications précédentes, dans lequel ledit élément de couplage (24, 32; 124, 132) a une forme oblongue dans la direction de son axe de rotation (26, 34; 126, 134).
